# EUROPÄISCHE PATENTSCHRIFT

(11) **EP 1 086 330 B1**
(45) Veröffentlichungstag und Bekanntmachung des Hinweises auf die Patenterteilung: **06.02.2002**
(21) Anmeldenummer: 99926512.7
(22) Anmeldetag: 02.06.1999
(51) Int. Cl.: F16L 55/033, F01N 1/18, B60K 13/04

(54) **AUFHÄNGEÖSE FÜR EINE SCHWINGENDE LAST, INSBESONDERE FÜR EINE ABGASANLAGE EINES KRAFTFAHRZEUGS**
SUSPENSION EYE FOR A VIBRATING LOAD, ESPECIALLY FOR AN EXHAUST GAS INSTALLATION OF A MOTOR VEHICLE
OEIL DE SUSPENSION POUR CHARGE OSCILLANTE, NOTAMMENT POUR LE SYSTEME DE GAZ D'ECHAPPEMENT D'UNE AUTOMOBILE

(30) Priorität: 09.06.1998 DE 19825811
(43) Veröffentlichungstag der Anmeldung: 28.03.2001
(73) Patentinhaber: SGF SÜDDEUTSCHE GELENKSCHEIBENFABRIK GMBH & CO. KG., 84478 Waldkraiburg (DE)
(72) Erfinder: ANDRÄ, Rainer, D-65554 Limburg (DE)
(74) Vertreter: Goetz, Rupert, Dipl.-Ing.
(86) Internationale Anmeldenummer: EP9903850
(87) Internationale Veröffentlichungsnummer: WO9964777

(56) Entgegenhaltungen:
- EP-A- 0 816 734
- DE-A- 3 737 987
- US-A- 3 977 486

## Beschreibung

Die Erfindung betrifft eine Aufhängeöse nach dem oberbegriff des Anspruchs 1.

Bei einer bekannten Aufhängeöse dieser Gattung (DE 37 37 987 C2) sind die beiden Befestigungskörper zylindrische Buchsen, und die biegsame Einlage ist um beide Buchsen herumgewickelt, so daß sie an jeder von Ihnen annähernd halbkreisförmig anliegt und sich dann tangential wegerstreckt. Die an der Außenseite der Buchsen anliegenden Bereiche der Einlage und die sie einbettenden Teile des Elastomerkörpers machen einen nennenswerten Teil der gesamten Bauhöhe der Aufhängeöse aus, ohne einen entsprechenden Beitrag zu deren Federungseigenschaften zu leisten.

Der Erfindung liegt deshalb die Aufgabe zugrunde, eine Aufhängeöse für eine schwingende Last, insbes. für eine Abgasanlage eines Kraftfahrzeugs, derart zu gestalten, daß sie bei gegebener Belastbarkeit und gegebener Federkennlinie eine geringere Bauhöhe beansprucht.

Die Aufgabe ist erfindungsgemäß mit den Merkmalen des Anspruchs 1 gelöst. Vorteilhafte Weiterbildungen ergeben sich aus den Unteransprüchen.

Ausführungsbeispiele der Erfindung werden im folgenden anhand schematischer Zeichnungen mit weiteren Einzelheiten erläutert.
Es zeigen:
- Fig. 1: eine erste Ausführungsform einer erfindungsgemäßen Aufhängeöse im senkrechten Schnitt I-I in Fig.4,
- Fig.2: den waagerechten Schnitt II-II in Fig.1,
- Fig.3: den waagerechten Schnitt III-III in Fig.1,
- Fig.4: den senkrechten Schnitt IV-IV in Fig.1,
- Fig.5: ein Befestigungsteil der Aufhängeöse aus Fig.1 bis 4 in perspektivischer Ansicht,
- Fig.6: eine zweite Ausführungsform einer erfindungsgemäßen Aufhängeöse im senkrechten Schnitt VI-VI in Fig.8,
- Fig.7: den waagerechten Schnitt VII-VII in Fig.6,
- Fig.8: den senkrechten Schnitt VIII-VIII in Fig.6 und
- Fig.9: ein Befestigungsteil der Aufhängeöse aus Fig.6 bis 8 in perspektivischer Ansicht.

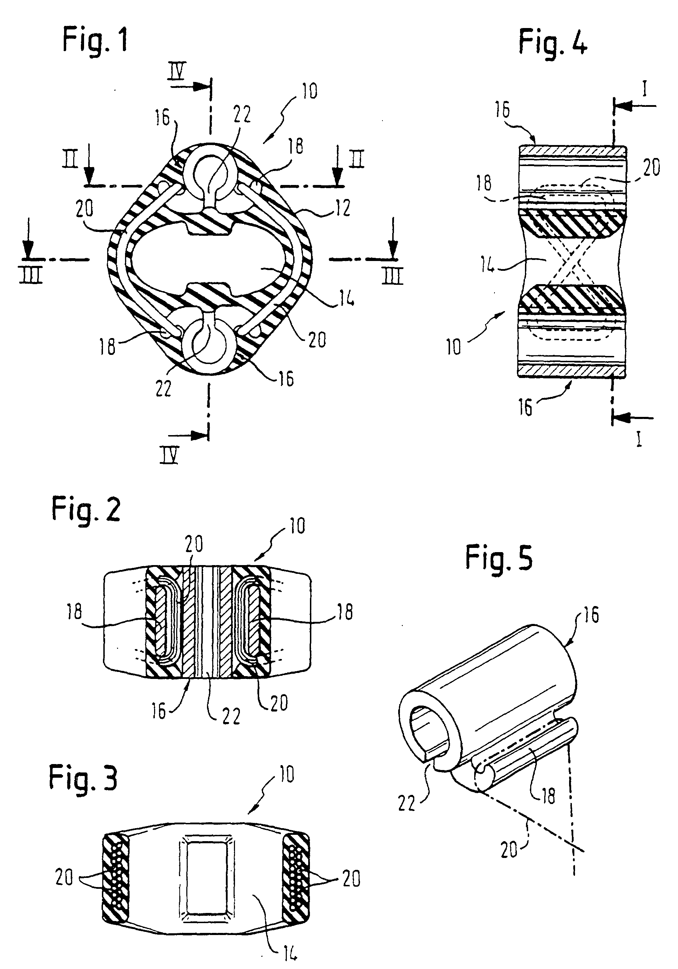

Die in Fig.1 bis 4 dargestellte Aufhängeöse hat einen ringförmigen Elastomerkörper 10 mit einer Außenwand 12, die in unbelastetem Zustand der Aufhängeöse in Seitenansicht gemäß Fig.1 die Form eines Quadrats mit abgerundeten Ecken aufweist. Der Elastomerkörper 10 ist in bezug auf eine bei üblicher, in Fig.1 dargestellter Anordnung der Aufhängeöse waagerechte Ebene sowie in bezug auf eine senkrechte Ebene spiegelsymmetrisch und hat eine zentrale Aussparung 14, die im wesentlichen die Form eines liegenden Ovals hat. In den Elastomerkörper 10 ist oben und unten je ein Befestigungsteil 16 eingebettet, insbesondere einvulkanisiert, das Anhängezonen 18 für eine biegsame Einlage 20 aufweist. Die Anhängezonen 18 sind so gestaltet und seitlich an den Befestigungsteilen 16 angeordnet, daß sie ohne Einfluß auf die Bauhöhe der Aufhängeöse sind.

Bei der in Fig.1 bis 3 dargestellten Aufhängeöse sind die Befestigungsteile 16 Buchsen, und ihre Anhängezonen 18 sind voneinander wegragende Haken, die durch einen Längsschlitz 22 voneinander getrennt sind. Die Einlage 20 ist von zwei getrennten Fadenschlingen oder -wickeln gebildet, die an je eine der beiden Anhängezonen 18 des oberen und des unteren Befestigungsteils 16 angehängt sind, sich ungefähr radial von den Befestigungsteilen 16 wegerstrecken und dazwischen insich 8-förmig gekreuzt sind. Die Längsschlitze 22 der beiden Befestigungsteile 16 sind einander zugewandt. Die Oberseite des oberen und die Unterseite des unteren Befestigungsteils 16 sind glatte Zylinderflächen, die entweder freiliegen oder nur von einer dünnen Elastomerschicht bedeckt, jedenfalls aber nicht von der Einlage 20 umschlungen sind.

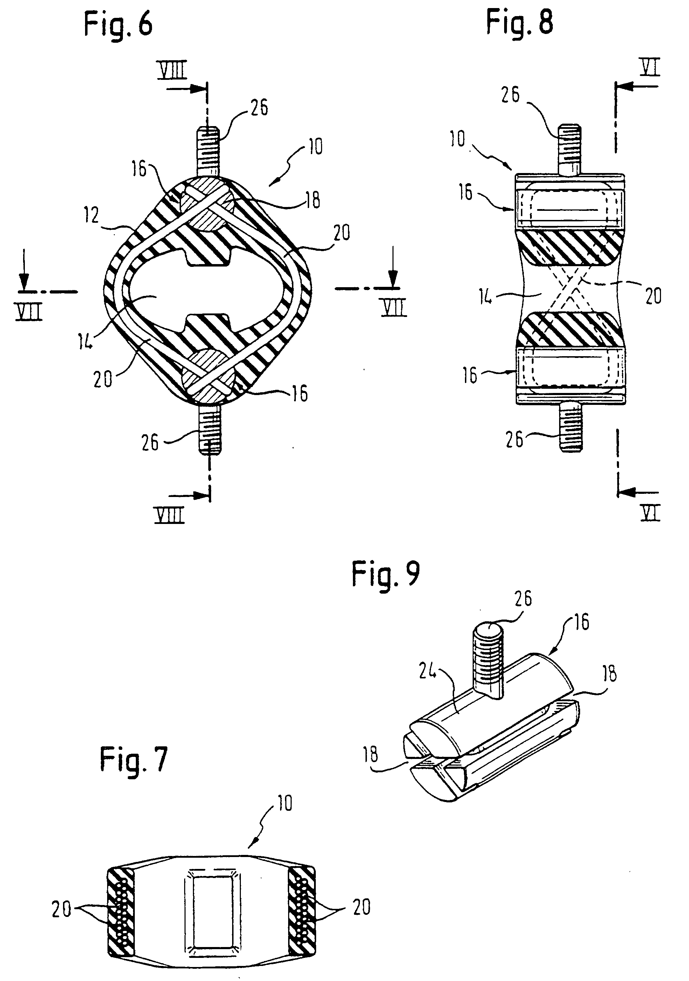

Die Aufhängeöse gemäß Fig.6 bis 9 unterscheidet sich von der in Fig.1 bis 5 dargestellten im wesentlichen dadurch, daß die Befestigungsteile 16 T-förmig von je einem massiven, im wesentlichen zylindrischen Bolzen 24 und je einem mittig im rechten Winkel vom Bolzen 24 wegragenden Gewindezapfen 26 gebildet sind. Die Gewindezapfen 26 ragen nach oben bzw. nach unten aus dem Elastomerkörper 10 heraus, um an je einer entsprechenden Halterung, z.B. an der Bodenplatte eines Kraftfahrzeugs bzw. an einem Auspufftopf, befestigt zu werden. Als Anhängezonen 18 für die wiederum aus zwei getrennten Schlingen bestehende Einlage 20 sind stirnseitig und längs je einer Mantellinie eingearbeitete Schlitze vorgesehen.

Beiden dargestellten Ausführungsbeispielen ist gemeinsam, daß die Befestigungsteile 16 mit ihren Anhängezonen 18 als Fließpreßteile aus Metall oder als Spritzgußteile aus Kunststoff hergestellt werden können, und daß als Einlage 20 Schlingenpakete der bei Gelenkscheiben üblichen Art verwendet werden können.

## Patentansprüche

1. Aufhängeöse für eine schwingende Last, insbes. für eine Abgasanlage eines Kraftfahrzeugs, mit
- einem ringförmigen Elastomerkörper (10),
- zwei Befestigungsteilen (16), die in dem Elastomerkörper (10) einander diametral gegenüberliegend angeordnet sind, und
- einer biegsamen Einlage (20) in Schlingenform, die in den Elastomerkörper (10) so eingebettet ist, daß sie bei Zugbelastung der Aufhängeöse Zugkräfte von einem Befestigungsteil (16) zum anderen überträgt,
**dadurch gekennzeichnet, daß** mindestens eines der Befestigungsteile (16) Anhängezonen (18) aufweist, an denen die Einlage (20) derart angehängt ist, daß sie sich im wesentlichen radial von diesem Befestigungsteil (16) wegerstreckt.

2. Aufhängeöse nach Anspruch 1,
**dadurch gekennzeichnet, daß** die Einlage (20) zwischen den Befestigungsteilen (16) insich 8-förmig gekreuzt ist.

3. Aufhängeöse nach Anspruch 1 oder 2,
**dadurch gekennzeichnet, daß** das genannte Befestigungsteil (16) ein Paar seitlich angeordnete, hakenförmige Anhängezonen (18) aufweist.

4. Aufhängeöse nach Anspruch 3,
**dadurch gekennzeichnet, daß** das genannte Befestigungsteil (16) eine Buchse ist, die zwischen den Anhängezonen (18) einen Längsschlitz (22) aufweist.

5. Aufhängeöse nach Anspruch 1 oder 2,
**dadurch gekennzeichnet, daß** das genannte Befestigungsteil (16) als Anhängezonen (18) Schlitze aufweist.

6. Aufhängeöse nach Anspruch 5,
**dadurch gekennzeichnet, daß** das Befestigungsteil (16) T-förmig mit einem die Anhängezonen (18) aufweisenden Bolzen (24) und einem mittig im rechten Winkel davon wegragenden Gewindezapfen (26) ausgebildet ist.

## Claims

1. A suspension lug for a swinging load, especially an exhaust system of a motor vehicle, comprising
- a ring-shaped elastomer body (10)
- two fixing parts (16) arranged diametrically opposite each other in the elastomer body (10), and
- a flexible insert (20) in the form of a loop embedded in the elastomer body (10) in such a way that it transmits tensile forces from one fixing part (16) to the other when the suspension lug is subjected to tensile loading,
**characterized in that** at least one of the fixing parts (16) has attachment areas (18) on which the insert (20) is hung in such a way that it extends essentially radially away from this fixing part (16).

2. The suspension lug as claimed in claim 1, **characterized in that** the insert (20) is crossed in a figure of eight between the fixing parts (16).

3. The suspension lug as claimed in claim 1 or 2, **characterized in that** the fixing part (16) mentioned comprises a pair of hook-shaped attachment areas (18) which are provided laterally.

4. The suspension lug as claimed in claim 3, **characterized in that** the fixing part (16) mentioned is a sleeve which has a longitudinal slot (22) between the attachment areas (18).

5. The suspension lug as claimed in claim 1 or 2, **characterized in that** the fixing part (16) mentioned has slots as attachment areas (18).

6. The suspension lug as claimed in claim 5, **characterized in that** the fixing part (16) is T-shaped, including a prop (24) which comprises the attachment areas (18) and a threaded pin (26) projecting at right angles from the middle of said prop.

## Revendications

1. Oeillet de suspension pour une charge oscillante, en particulier pour un système de gaz d'échappement d'un véhicule automobile, comportant :
- un corps en élastomère de forme annulaire (10),
- deux pièces de fixation (16) qui sont agencées diamétralement opposées l'une part rapport à l'autre dans le corps en élastomère (10), et
- une garniture (20) souple en forme de boucle qui est encastrée dans le corps en élastomère de telle sorte que lorsque l'oeillet de suspension est sollicité par traction, elle transmet des forces de traction depuis une pièce de fixation (16) à l'autre,
**caractérisé en ce qu'**au moins une des pièces de fixation (16) présente des zones d'accrochage sur lesquelles la garniture (20) est accrochée de telle manière qu'elle s'étend sensiblement radialement en éloignement de cette pièce de fixation (16).

2. Oeillet de suspension selon la revendication 1, **caractérisé en ce que** la garniture (20) est croisée en forme de huit sur elle même entre les pièces de fixation (16).

3. Oeillet de fixation selon l'une ou l'autre des revendications 1 et 2, **caractérisé en ce que** ladite pièce de fixation (16) présente une paire de zones d'accrochage (18) en forme de crochet agencées latéralement.

4. Oeillet de fixation selon la revendication 3, **caractérisé en ce que** ladite pièce de fixation (16) est une douille qui présente une fente longitudinale (22) entre les zones d'accrochage (18).

5. Oeillet de fixation selon l'une ou l'autre des revendications 1 et 2, **caractérisé en ce que** ladite pièce de fixation (16) présente des fentes à titre zones d'accrochage (18).

6. Oeillet de fixation selon la revendication 5, **caractérisé en ce que** la pièce de fixation (16) est réalisée en forme de T avec un goujon (24) présentant la zone d'accrochage (18) et une goupille filetée faisant saillie hors de celui-ci au milieu en angle droit.
